# FASCICULE DE BREVET EUROPEEN

(11) **EP 2 366 610 B1**
(45) Date de publication et mention de la délivrance du brevet: **01.05.2013**
(21) Numéro de dépôt: 10305205.6
(22) Date de dépôt: 01.03.2010
(51) Int. Cl.: B62H 3/10, B62H 5/00, B62H 5/20, G07F 17/10

(54) **Station de stockage de cycles**
Fahrradabstellstation
Cycle storage station

(43) Date de publication de la demande: 21.09.2011
(73) Titulaire: JCDecaux SA, 92200 Neuilly-Sur-Seine (FR)
(72) Inventeur: Pheulpin, Rémi, 78470, SAINT LAMBERT (FR)
(74) Mandataire: Cabinet Plasseraud

(56) Documents cités:
- EP-A2- 2 130 750
- DE-A1- 19 532 736
- DE-U1- 9 203 850
- DE-U1-202006 004 849
- GB-A- 2 420 327
- US-A1- 2004 050 807
- US-B1- 6 182 836

## Description

### DOMAINE DE L'INVENTION

La présente invention est relative aux stations de stockage de cycles.

Plus particulièrement, l'invention concerne une station de stockage de cycles comprenant :
- une plateforme,
- une pluralité de postes de verrouillage fixés sur la plateforme et adaptés pour verrouiller des cycles,
- au moins un système de commande embarqué solidaire de la plateforme, ledit système de commande embarqué étant adapté pour communiquer avec un dispositif de commande externe et pour commander le verrouillage et le déverrouillage des cycles sur les postes de verrouillage en fonction d'autorisations reçues de ce dispositif de commande externe.

### ARRIERE PLAN DE L'INVENTION

Une telle station de stockage de cycles est connue par exemple du document EP-A-2 130 750. Les stations de ce type peuvent éventuellement être installées temporairement, notamment à l'occasion d'évènements tels qu'expositions artistiques ou commerciales, manifestations sportives ou autres. Toutefois, l'installation temporaire de telles stations nécessite l'intervention d'un camion doté d'un bras de levage, de sorte que cette installation reste une opération relativement lourde, longue et coûteuse, qui de plus n'est pas aisément réalisable en milieu d'urbanisation dense.

### OBJETS DE L'INVENTION

La présente invention a notamment pour but de pallier cet inconvénient.

A cet effet, selon l'invention, une station de stockage de cycles du genre en question est caractérisée en ce que la plateforme est pourvue de roues et est adaptée pour être tractée derrière un véhicule, ladite station comportant en outre des moyens d'appui pour faire reposer ladite plateforme sur le sol de façon stable indépendamment du véhicule.

Grâce à ces dispositions, la station de stockage de cycles peut être déplacée, installée et désinstallée très facilement et rapidement, sans intervention de moyens lourds.

Dans différents modes de réalisation de l'invention, on peut éventuellement avoir recours en outre à l'une et/ou à l'autre des dispositions suivantes (utilisables éventuellement indépendamment les unes des autres et indépendamment des dispositions précitées) :
- lesdits moyens d'appui comprennent des dispositifs d'appui rétractables disposés de part et d'autre des roues ;
- chaque dispositif d'appui comprend un pied d'appui rétractable adapté pour être déployé et bloqué dans une position d'appui où ledit pied d'appui repose sur le sol ;
- ledit pied d'appui est actionné par un vérin adapté pour sélectivement déployer ou rétracter ledit pied d'appui ;
- ledit vérin est adapté pour sélectivement, soit soulever la plateforme afin de permettre un démontage et un remontage des roues, soit abaisser la plateforme au niveau du sol ;
- la plateforme est pourvue de rampes d'accès adaptées pour permettre à l'utilisateur d'accéder à ladite plateforme et de quitter ladite plateforme avec un cycle ;
- le système de commande embarqué comporte une interface de liaison radio adaptée pour communiquer avec le dispositif de commande externe ;
- la plateforme comporte en outre au moins un dispositif d'alimentation électrique autonome adapté pour alimenter électriquement le système de commande embarqué et les postes de verrouillage.

### BREVE DESCRIPTION DES DESSINS

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique en perspective montrant une station de stockage de cycles selon une première forme de réalisation de l'invention, en position de roulage,
- la figure 2 est une vue de détail montrant un des postes de verrouillage de la station de la figure 1,
- la figure 3 est une vue de la station de la figure 1 en position d'utilisation,
- la figure 3a est une vue de détail en coupe montant un des dispositifs d'appui de la plateforme,
- la figure 4 est un schéma bloc illustrant les composants électriques principaux de la station de stockage de cycles des figures 1 à 3,
- et la figure 5 est une vue schématique en perspective montrant une station de stockage de cycles selon une deuxième forme de réalisation de l'invention.

### DESCRIPTION PLUS DETAILLEE

Sur les différentes figures, les mêmes références désignent des éléments identiques ou similaires.

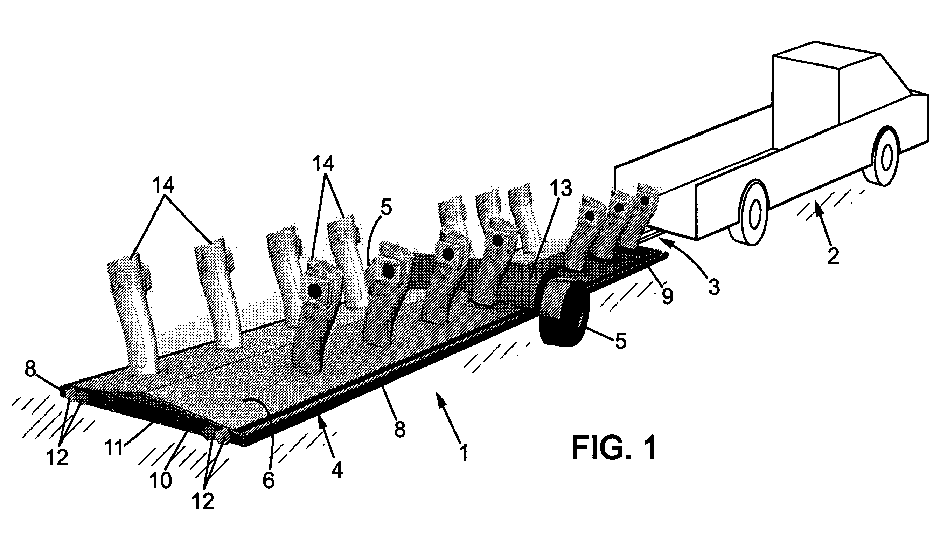

Comme représenté sur la figure 1, la présente invention concerne une station mobile 1 de stockage de cycles permettant par exemple de stocker des cycles sur la voie publique de façon à les mettre à disposition du public par location ou autre. Les cycles en question peuvent être notamment des bicyclettes.

Cette station mobile 1 peut s'intégrer dans un système automatique de stockage de cycles couvrant une zone géographique déterminée, par exemple une ville ou une conurbation, tel que décrit par exemple dans les documents EP-B-1 390 922, EP-1 690 240 et EP-A-1 820 721. Ce système automatique comporte une pluralité de stations automatiques de stockage de cycles dont certaines peuvent être fixes, et qui sont commandées par un dispositif de commande externe tel qu'un serveur central de gestion de location, comme il sera expliqué plus en détails ci-après.

La station mobile 1 de stockage de cycles se présente sous la forme d'une remorque adaptée pour être tractée par un véhicule 2 par l'intermédiaire d'un accouplement 3 connu en soi.

De façon plus détaillée, la station mobile 1 comprend une plateforme rigide 4 de relativement faible épaisseur (par exemple de 10 à 30 cm d'épaisseur) qui est montée sur des roues 5, en l'occurrence deux roues 5 latérales dans l'exemple représenté. La plateforme est de préférence montée sur les roues par un montage surbaissé, de façon que ladite plateforme ait une faible garde au sol (par exemple entre 10 et 20 cm).

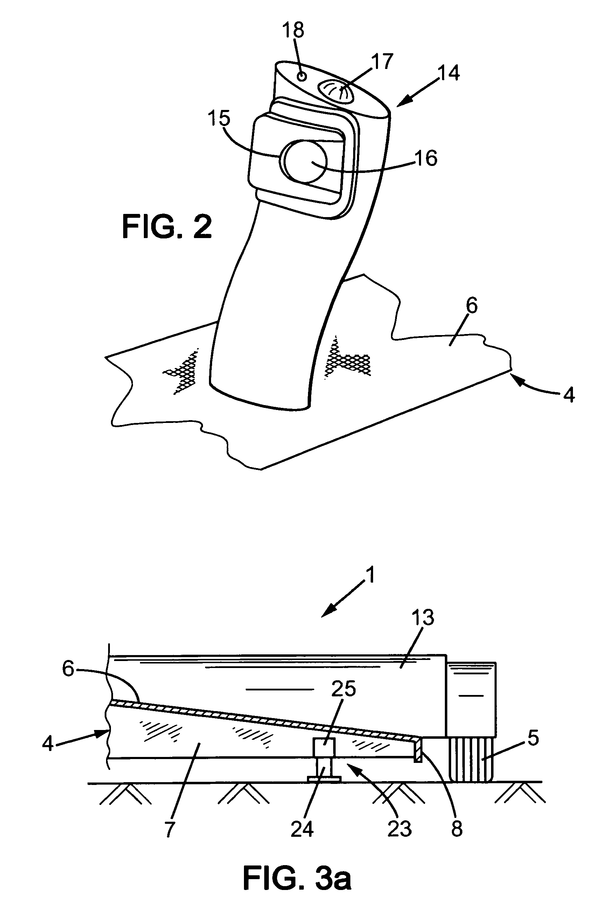

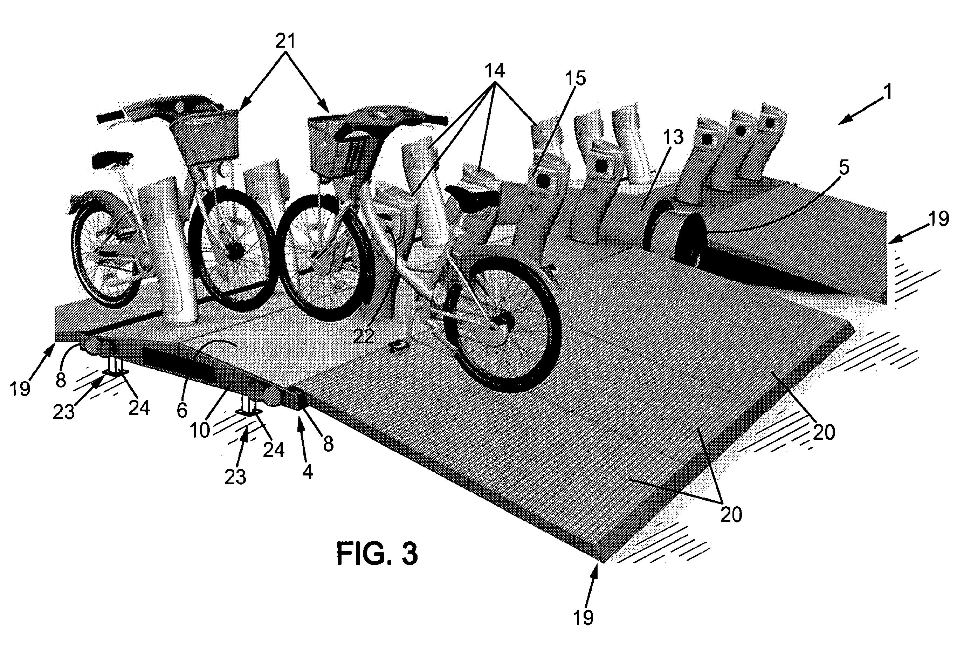

Dans l'exemple particulier de la figure 1, la plateforme présente une surface supérieure formée par un platelage 6 de tôle qui est supporté par un châssis rigide 7 (voir la figure 3a) et qui peut par exemple présenter une double pente descendant vers les bords latéraux 8 de la plateforme. Bien entendu, de nombreuses autres dispositions sont possibles et le platelage 6 pourrait éventuellement être horizontal ou à simple pente.

La plateforme 4 s'étend longitudinalement entre une extrémité avant 9 pourvue de l'accouplement 3 susmentionné, et une extrémité arrière 10 pourvue d'une plaque d'immatriculation 11 et de feux de signalisation 12 adaptés pour être commandés par le véhicule 2.

La plateforme 4 peut éventuellement comporter en outre, au-dessus du platelage 6, un carter transversal 13 situé au niveau des roues 5. Ce carter 13 permet par exemple le passage de l'essieu des roues 5, et il peut en outre éventuellement abriter divers équipements (décrits plus en détails ci-après) tels qu'un éventuel dispositif autonome d'alimentation électrique (groupe électrogène et/ou batteries), un système électronique de commande embarqué, une prise électrique de raccordement au réseau, etc.

Sur la plateforme 4 sont fixés en outre des postes de verrouillage 14 adaptés pour verrouiller des cycles. Dans l'exemple représenté sur la figure 1, ces postes de verrouillage 14 se présentent sous forme de bornes s'étendant sensiblement verticalement au-dessus du platelage 6 et disposées en deux rangées parallèles à la direction longitudinale de la plateforme, chacune des rangées de postes de verrouillage 14 étant située sur un des pans descendants du platelage 6, permettant éventuellement un accès direct aux postes de verrouillage 13 par les deux côtés de la plateforme. Bien entendu, de nombreuses autres dispositions sont possibles pour les postes de verrouillage 14, et ceux-ci pourraient par exemple être disposés en une seule rangée notamment lorsque la plateforme 4 est plus étroite.

Comme représenté sur la figure 2, chaque poste de verrouillage 14 peut éventuellement comporter une gâche 15 adaptée pour recevoir par engagement horizontal, un organe de verrouillage solidaire du cadre du cycle, cette gâche étant équipée d'un verrou électrique adapté pour sélectivement verrouiller le cycle sur le poste de verrouillage ou le libérer. La gâche 15 peut en outre être équipée d'une interface de communication 16 sans contact (par exemple fonctionnant par induction) ou dotée de contacts électriques, permettant la communication et/ou l'échange d'énergie électrique avec un cycle verrouillé sur le poste de verrouillage 14.

Le poste de verrouillage 14 peut en outre comporter un lecteur de carte RFID 17, sur lequel un utilisateur déjà inscrit auprès du système automatique de stockage de cycles peut faire lire une carte d'abonnement sans contact qui lui permet de faire libérer un cycle verrouillé sur le poste de verrouillage 14. Le lecteur 17 peut être remplacé par toute autre interface permettant de lire une carte identifiant l'utilisateur, ou permettant de communiquer à très courte distance avec le téléphone mobile de l'utilisateur dans le même but. Le poste de verrouillage 14 comporte également au moins un voyant 18 qui permet d'indiquer notamment son état, et ledit poste de verrouillage 14 peut éventuellement comporter également un haut parleur et/ou un écran miniature (non représentés).

En variante ou en complément, la station mobile 1 pourrait également comporter une borne interactive dédiée à l'interface avec les utilisateurs, comprenant un ou plusieurs lecteurs de cartes, un clavier et un écran come décrit notamment dans les documents EP-B-1 390 922, EP-1 690 240 et EP-A-1 820 721 susmentionnés.

Comme représenté sur les figures 3 et 3a, la station mobile 1, une fois transportée sur son lieu d'utilisation, peut être pourvue de rampes d'accès latérales 19, constituées par exemple de plaques de tôle 20 juxtaposées dont un bord latéral est accroché sur un des bords latéraux 8 de la plateforme, le bord latéral opposé de chaque plaque 20 reposant sur le sol.

Les rampes d'accès latérales 19 sont mises en place des deux côtés de la plateforme 4 dans l'exemple représenté, mais pourraient éventuellement être mises en place d'un seul côté. Ces rampes d'accès peuvent être apportées sur place par exemple dans le véhicule 2, ou encore, ces rampes d'accès peuvent être posées sur la plateforme 4 ou articulées sur les bords latéraux 8 de ladite plateforme et relevées pendant le transport (non représenté sur la figure 1).

Comme on peut le voir sur les figures 3 et 3a, la station mobile 1 comporte en outre des moyens d'appui pour faire reposer la plateforme 4 sur le sol de façon stable en position d'utilisation, en plus des roues 5. Ces moyens d'appui peuvent comprendre par exemple des dispositifs d'appui 23 rétractables disposés à l'avant et à l'arrière des roues 5, par exemple deux dispositifs d'appui 23 à l'avant et deux à l'arrière.

Chaque dispositif d'appui 23 peut comprendre un pied d'appui 24 rétractable actionné par un vérin 25 adapté pour sélectivement déployer ou rétracter ledit pied d'appui. Chaque pied d'appui 24 peut ainsi être soit escamoté dans le châssis 7 de la plateforme 4 en position de roulage de la plateforme, soit déployé vers le bas et bloqué dans une position d'appui où ledit pied d'appui repose sur le sol, lorsque la station mobile 1 est en position s'utilisation.

Les vérins 25 peuvent être des vérins hydrauliques ou des vérins mécaniques motorisés ou actionnés manuellement.

En variante, les vérins 25 pourraient être supprimés et remplacés par de simples moyens de blocage pour bloquer chaque pied 24 sélectivement soit en position escamotée, soit en position déployée.

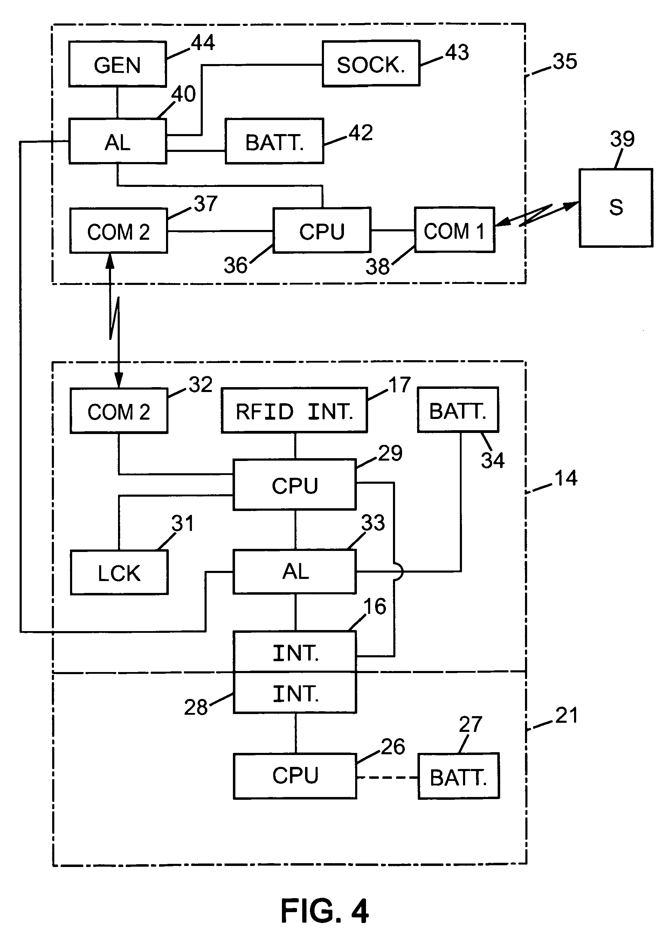

Comme représenté sur la figure 4, chaque cycle 21 du système automatique de stockage de cycles peut comporter par exemple une unité centrale électronique 26 (CPU) telle qu'un microprocesseur ou microcontrôleur, alimentée par une batterie 27 et reliée à une interface de communication 28 (INT.) adaptée pour communiquer avec le poste de verrouillage 14 sur lequel est verrouillé le cycle.

Chaque poste de verrouillage 14 comporte quant à lui :
- une unité centrale électronique 29 (CPU) telle qu'un microprocesseur ou microcontrôleur,
- l'interface de communication susmentionnée 16, reliée à l'unité centrale 29 pour lui permettre de communiquer avec l'unité centrale 26 du cycle verrouillé sur le poste de verrouillage 14,
- le lecteur de carte RFID 17 susmentionné, également relié à l'unité centrale 29,
- le verrou électrique 31 susmentionné (LCK), commandé par l'unité centrale 29,
- éventuellement, une interface de communication sans fil 32 (COM 2) reliée à l'unité centrale 29 et permettant de communiquer avec le système de commande embarqué susmentionné sous un protocole radio courte portée tels que les protocoles BLUETOOTH, ZIGBEE ou autres (en variante, une liaison filaire peut être prévue entre l'unité centrale 29 et le système de commande embarqué, auquel cas cette interface de communication peut être omise),
- un circuit d'alimentation électrique 33 (AL) alimentant l'unité centrale 29 et le cas échéant le verrou 31,
- éventuellement, une batterie 34 (BATT.) alimentant le circuit 33,
- éventuellement, divers accessoires reliés à l'unité centrale 29, par exemple le voyant 18 susmentionné et autres (non représentés sur la figure 4).

Enfin, le système de commande embarqué 25 susmentionné peut comporter une unité centrale électronique 36 (CPU) telle qu'un microprocesseur ou autre, qui communique avec :
- une interface de communication sans fil 37 (COM 2) communiquant elle-même avec l'interface de communication 32 de chaque poste de verrouillage 32 et fonctionnant sous le même protocole de communication que celle-ci (cette interface 37 peut éventuellement être omise en cas de liaison filaire entre le système de commande embarqué 35 et les postes de verrouillage 14, comme expliqué ci-dessus),
- une interface de communication 38 (COM 1), par exemple un MODEM GPRS ou autre, adaptée pour communiquer avec un serveur central éloigné 39 (S).

De plus, la plateforme 4 comporte également un circuit d'alimentation électrique 40, disposé par exemple dans le carter 13, qui alimente au moins l'unité centrale 36 du système de commande embarqué 35 et le cas échéant les circuits d'alimentation 33 des postes de verrouillage 14. Ce circuit d'alimentation 40 est lui-même alimenté par une batterie 42 (BATT.) et/ou par une prise électrique 43 (SOCK.) pouvant éventuellement être branchée sur le réseau électrique et/ou par le groupe électrogène 44 susmentionné (GEN) et/ou par un panneau photovoltaïque (non représenté). Ainsi, la station mobile peut fonctionner sur le réseau électrique lorsque c'est possible, ou avec les moyens d'alimentation électriques autonomes susmentionnés (batterie 42, groupe électrogène 44 ou panneau photovoltaïque) sinon.

Le système de stockage de cycle incluant la station mobile 1 qui vient d'être décrite, fonctionne comme suit.

Lorsqu'un utilisateur veut emprunter un cycle 21 sur l'un des postes de verrouillage 14, il peut faire lire sa carte d'abonné dotée d'une puce RFID, par le lecteur de carte 17 du poste de verrouillage 14 en question. L'unité centrale 29 du poste de verrouillage communique alors avec l'unité centrale 36 du système de commande embarqué, qui à son tout communique avec le serveur central 39 de gestion de location. Si le serveur 39 donne son accord à la location, cet accord est transmis par l'unité centrale 36 à l'unité centrale 29 qui actionne le verrou 31 pour libérer le cycle 21 précédemment verrouillé sur le poste de verrouillage 14 concerné. L'utilisateur peut alors prendre le cycle 21.

Lorsque l'utilisateur rend ultérieurement le cycle 21 et le met en place sur un poste de verrouillage 14 de la station mobile 1 ou d'une autre station, il engage l'organe de verrouillage 22 du cycle dans la gâche 15 d'un des postes de verrouillage 14 libres de la station, et cet organe de verrouillage se verrouille automatiquement dans ladite gâche. L'unité centrale électronique 29 du poste de verrouillage concerné peut alors communiquer avec l'unité centrale électronique 26 du cycle par l'intermédiaire des interfaces 16, 28 pour identifier le cycle rendu, et cette information est transmise au serveur 39 par l'intermédiaire de l'unité centrale 36 du système de commande embarqué 35.

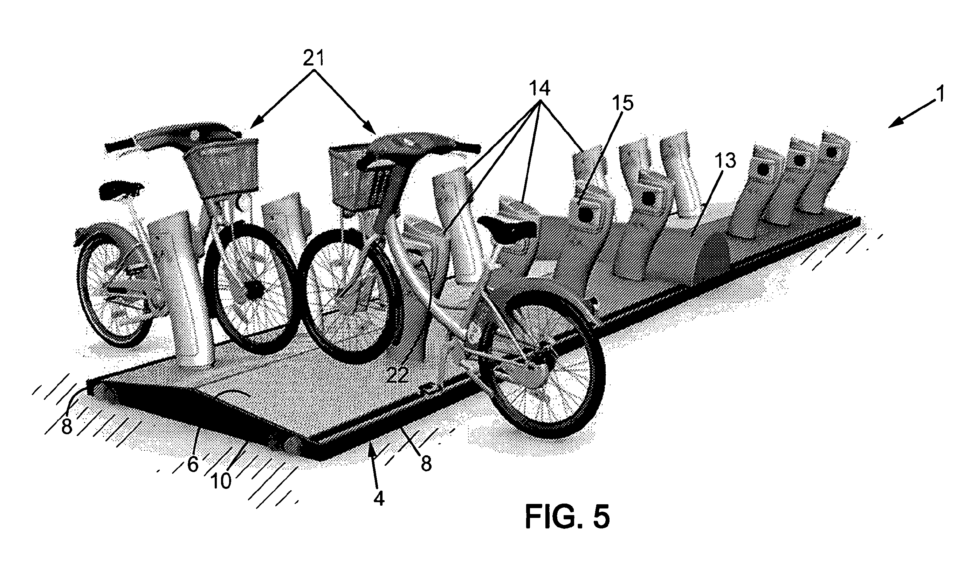

La deuxième forme de réalisation de l'invention, représentée sur la figure 5, est similaire à la première forme de réalisation déjà décrite, tant dans la structure que dans le fonctionnement de la station mobile 1. Cette deuxième forme de réalisation ne sera donc pas décrite à nouveau en détail, et seules seront décrites les différences entre la deuxième forme de réalisation et la première forme de réalisation. Ces différences concernent uniquement le démontage possible des roues 5 de la station mobile (avec éventuellement une partie inférieure de la plateforme 4).

A cet effet, on peut par exemple prévoir que les vérins 25 des pieds d'appui 24 puissent soulever la plateforme suffisamment pour que les roues 5 ne touchent plus le sol, après quoi on peut démonter les roues 5 et rétracter les pieds 24 à l'aide des vérins 25 jusqu'à ce que la face inférieure de la plateforme repose sur le sol, comme on peut le voir sur la figure 5. Dans ce cas, la plateforme peut éventuellement être utilisée sans adjonction de rampes d'accès 19.

## Revendications

1. Station de stockage de cycles comprenant :
- une plateforme (4),
- une pluralité de postes de verrouillage (14) fixés sur la plateforme (4) et adaptés pour verrouiller des cycles (21),
- au moins un système de commande embarqué (35) solidaire de la plateforme (4), ledit système de commande embarqué étant adapté pour communiquer avec un dispositif de commande externe (39) et pour commander le verrouillage et le déverrouillage des cycles (21) sur les postes de verrouillage (14) en fonction d'autorisations reçues de ce dispositif de commande externe (39),
**caractérisée en ce que** la plateforme (4) est pourvue de roues (5) et est adaptée pour être tractée derrière un véhicule (2), ladite station comportant en outre des moyens d'appui (23) pour faire reposer ladite plateforme sur le sol de façon stable indépendamment du véhicule (2).

2. Station de stockage de cycles selon la revendication 1, dans laquelle lesdits moyens d'appui comprennent des dispositifs d'appui (23) escamotables disposés de part et d'autre des roues (5).

3. Station de stockage de cycles selon la revendication 2, dans laquelle chaque dispositif d'appui (23) comprend un pied d'appui (24) rétractable adapté pour être déployé et bloqué dans une position d'appui où ledit pied d'appui repose sur le sol.

4. Station de stockage de cycles selon la revendication 3, dans laquelle ledit pied d'appui (24) est actionné par un vérin (25) adapté pour sélectivement déployer ou rétracter ledit pied d'appui (24).

5. Station de stockage de cycles selon la revendication 4, dans laquelle ledit vérin (25) est adapté pour sélectivement, soit soulever la plateforme (5) afin de permettre un démontage et un remontage des roues (5), soit abaisser la plateforme au niveau du sol.

6. Station de stockage de cycles selon l'une quelconque des revendications précédentes, dans laquelle la plateforme (4) est pourvue de rampes d'accès (19) adaptées pour permettre à l'utilisateur d'accéder à ladite plateforme et de quitter ladite plateforme avec un cycle (21).

7. Station de stockage de cycles selon l'une quelconque des revendications précédentes, dans laquelle le système de commande embarqué (35) comporte une interface de liaison radio (38) adaptée pour communiquer avec le dispositif de commande externe (39).

8. Station de stockage de cycles selon l'une quelconque des revendications précédentes, dans laquelle la plateforme (4) comporte en outre au moins un dispositif d'alimentation électrique autonome (42, 44) adapté pour alimenter électriquement le système de commande embarqué (35) et les postes de verrouillage (14).

## Claims

1. Cycle storage station comprising:
- a platform (4),
- a plurality of locking posts (14) fixed on the platform (4) and adapted for locking cycles (21),
- at least one onboard control system (35) integral with the platform (4), said onboard control system being suited for communicating with an external control device (39) and for controlling the locking and unlocking of the cycles (21) on the locking posts (14) according to the authorisations received from this external control device (39),
**characterised in that** the platform (4) is provided with wheels (5) and is suited to be towed behind a vehicle (2), said station further comprising means of support (23) in order to make said platform rest on the ground in a stable manner independent of the vehicle (2).

2. Cycle storage station according to claim 1, wherein said means of support include retractable supporting devices (23) arranged on either side of the wheels (5).

3. Cycle storage station according to claim 2, wherein each supporting device (23) comprises a retractable supporting foot (24) suited to be deployed and blocked in a position of support wherein said supporting foot rests on the ground.

4. Cycle storage station according to claim 3, wherein said supporting foot (24) is actuated by a cylinder (25) suited to selectively deploy or retract said supporting foot (24).

5. Cycle storage station according to claim 4, wherein said cylinder (25) is suited to selectively, either raise the platform (5) in order to allow for a removal and re-installation of the wheels (5), or lower the platform on the ground.

6. Cycle storage station as claimed in any preceding claim, wherein the platform (4) is provided with access ramps (19) suited to allow the user to access said platform and to leave said platform with a cycle (21).

7. Cycle storage station as claimed in any preceding claim, wherein the onboard control system (35) comprises a radio liaison interface (38) suited to communicate with the external control device (39).

8. Cycle storage station as claimed in any preceding claim, wherein the platform (4) further comprises at least one autonomous electrical power supply device (42, 44) suited to electrically supply the onboard control system (35) and the locking posts (14).

## Patentansprüche

1. Fahrradabstellstation, umfassend:
- eine Plattform (4),
- eine Mehrzahl von auf der Plattform (4) angebrachten Anschlusspfosten (14), welche dazu eingerichtet sind, dass an ihnen Fahrräder (21) angeschlossen werden können,
- wenigstens ein an der Plattform (4) angeordnetes mobiles Steuersystem (35), wobei das Steuersystem dazu eingerichtet ist, mit einer externen Steuervorrichtung (39) zu kommunizieren und das Anschließen und Freigeben der Fahrräder (21) an den Anschlusspfosten (14) gemäß von von der externen Steuervorrichtung (39) empfangenen Authorisierungen zu steuern,
**dadurch gekennzeichnet, dass** die Plattform (4) mit Rädern (5) versehen und dazu eingerichtet ist, hinter einem Fahrzeug (2) gezogen zu werden, wobei die Station ferner Abstützmittel (23) zum stabilen Aufstellen der Plattform unabhängig von dem Fahrzeug (2) auf dem Boden umfasst.

2. Fahrradabstellstation nach Anspruch 1, wobei die Abstützmittel versenkbare Abstützvorrichtungen (23) umfassen, welche auf beiden Seiten der Räder (5) angeordnet sind.

3. Fahrradabstellstation nach Anspruch 2, wobei jede Abstützvorrichtung (23) einen zurückziehbaren Abstützfuß (24) umfasst, welcher dazu eingerichtet ist, in eine Abstützposition ausgefahren und blockiert zu werden, in welcher der Abstützfuß auf dem Boden aufsteht.

4. Fahrradabstellstation nach Anspruch 3, wobei der Abstützfuß (24) von einer Hebevorrichtung (25) betätigt wird, welche dazu eingerichtet ist, den Abstützfuß selektiv aus- oder einzufahren.

5. Fahrradabstellstation nach Anspruch 4, wobei die Hebevorrichtung (25) dazu eingerichtet ist, selektiv die Plattform (5) entweder anzuheben, um ein Anbringen oder Entfernen der Räder (5) zu ermöglichen, oder die Plattform auf Bodenniveau abzusenken.

6. Fahrradabstellstation nach einem der vorhergehenden Ansprüche, wobei die Plattform (4) mit Zugangsrampen (19) versehen ist, welche dazu eingerichtet sind, es einem Benutzer zu erlauben, die Plattform mit einem Fahrrad (21) zu betreten und diese zu verlassen.

7. Fahrradabstellstation nach einem der vorhergehenden Ansprüche, wobei das mobile Steuersystem (35) eine Funkverbindungs-Schnittstelle (38) umfasst, welche dazu eingerichtet ist, mit der externen Steuervorrichtung (39) zu kommunizieren.

8. Fahrradabstellstation nach einem der vorhergehenden Ansprüche, wobei die Plattform (4) ferner wenigstens eine autonome Energieversorgungsvorrichtung (42, 44) umfasst, welche dazu eingerichtet ist, das mobile Steuersystem (35) und die Anschlusspfosten (14) elektrisch zu versorgen.
